Europäisches Patentamt

European Patent Office

Office européen des brevets

(19)

(11) EP 0 843 499 A2

(12) EUROPEAN PATENT APPLICATION

(43) Date of publication:
20.05.1998 Bulletin 1998/21

(51) Int. Cl.$^6$: H04Q 11/04

(21) Application number: 97119847.8

(22) Date of filing: 13.11.1997

(84) Designated Contracting States:
AT BE CH DE DK ES FI FR GB GR IE IT LI LU MC
NL PT SE
Designated Extension States:
AL LT LV MK RO SI

(30) Priority: 19.11.1996 IT MI962411
23.09.1997 IT MI972147

(71) Applicant: Italtel s.p.a.
20149 Milano (IT)

(72) Inventors:
• Daniele, Antonella
20010 Bareggio (MI) (IT)

• Campagna, Riccardo
23900 Lecco (IT)
• Paglino, Roberto
13100 Borgo Vercelli (VC) (IT)
• Pastorino, Alessandro
27100 Pavia (IT)
• Gallino, Roberto
15100 Alessandria (IT)

(74) Representative: Giustini, Delio
c/o Italtel S.p.A.,
Cascina Castelletto
20019 Settimo Milanese (MI) (IT)

(54) Method and device for the management of resources in ATM technique for weighted fair queuing (WFQ) applications

(57) The system (SORTER) includes an input link (B$_i$) on which transit flows of ATM cells belonging to service classes with different quality (QoS), and an output link (B$_o$), and including:

- a plurality of transmission queues (QA$_1$, QA$_2$, ..., QA$_n$);
- a control block (SCB) which contains a respective number of access rights to said output link (B$_o$) or tokens (TKN$_i$);
- a high priority storage structure (FGB);
- a low priority storage structure (FAB);
- at least one further transmission queue (QNA) which contains cells relating to all the flows which they transmit at a constant or peak rate, the indicators of which are contained in said high priority storage structure.

The system optionally includes a third storage structure with very low priority (FUB) for flows with unspecified rate, and a scheduler for the management of flows at limited peak rate.

Fig. 6

## Description

### Field of the Invention

This invention relates in general to a communication systems which use the numeric technique named fast switching of cells or ATM (Asynchronous Transfer Mode), for the transport of vocal signals, video signals and data.

More in particular, the invention relates to a method and device for the management of resources in ATM technique for Weighted Fair Queuing (WFQ) applications.

The ATM technique assumes a role of growing importance in the integrated switching of flows of numeric signals belonging to services for the transmission of vocal and video signals and data, with different bandwidth requirements and different traffic characteristics.

The ATM technique provides, in particular, that the information concerning the various services is organized in adjoining units with a fixed length of 424 bits (53 bytes), named cells. These cells contain, besides the real data, a header field which carries, among other things, the information necessary for the routing of this cell across the geographical network.

The connecting network, which serves to switch spatially the cells from an input to an output gate, must be capable of disposing of high volumes of traffic, of some hundreds of Gbit/s.

The introduction of service priority mechanisms on the flow of ATM cells, represented by single connections or by groups of connections, is connected with the support in the network of more quality classes of the service (QoS).

The need to supply guarantees for sources sensitive to the delay and, at the same time, the support to given applications which, tolerating higher delays, may use statistical allocation principles of the bandwidth, leads to the need to define and implement suitable integration schemes in the network. It is also possible to introduce service classes with available bandwidth (Available Bit Rate, ABR) which make it possible to better use the network resources and therefore offer users a more economical service.

### Background art

A well known technique for the implementation of the statistical allocation principles of the bandwidth is based on the Weighted Fair Queuing (WFQ) technique.

The WFQ technique represents a solution to the problem of subdividing the service (for example the bandwidth available on a link) among a certain number of active sessions. The aim is to guarantee that each of these active sessions receives a certain share proportional to the prefixed weight $r_i$.

If the sum of the weights $r_i$ assigned is lower than the bandwidth available on the output link $B_o$, each flow is guaranteed at least one bandwidth equal to $r_i$.

The WFQ technique is precisely defined only in the case where reference is made to a model of fluid-flow type, in which the servant is capable of dividing the service into arbitrarily small increases among a number of simultaneously active flows.

An implementable approximation of the WFQ technique is represented by the scheduling mechanism based on virtual spacing. The virtual spacing mechanism permits each flow to be served at least with bandwidth $r_i$ and to divide any available bandwidth (composed of the bandwidth of the link in excess or that of the inactive flows) among the active connections in proportion to $r_i$. The sessions may be viewed as logical queues of waiting cells. The service given to a queue is defined "event".

With the virtual spacing mechanism the scheduling of the cells waiting to be served is carried according to a priority, whose value is proportional to the weight assigned to the queue to which the cell belongs. The output link $B_o$ emits waiting cells in order of priority.

In the case of virtual spacing, the priority is represented by a time stamp, characterizing the virtual time of scheduling of the event. The emission of the cells takes place according to increasing values of time-stamps.

A key component for the realization of the scheduling is a device which reorganizes the waiting cells to identify those with highest priority. For the implementation of this device, sorting algorithms mainly based on two mechanisms are known and used, the first on a "virtual calendar" management, the second on an "intelligent FIFO" management.

The "virtual calendar" mechanism reorganizes the events on time stamp basis and subsequently scans the positions of the calendar. Any events scheduled in the same instant are served on FIFO or LIFO basis. Each event served is rescheduled in the calendar in a position equal to its previous virtual time + time stamp.

A drawback of the "virtual calendar" mechanism is that, to be able to continuously serve the output links, at each clock cycle the virtual calendar must be analyzed to find the next datum to serve. Since this research is not deterministic, possible delays may worsen the efficiency of the services. Moreover, in practical applications, the virtual calendar may easily assume large dimensions, which involve the execution of numerous research operations at each clock cycle.

The "intelligent FIFO" mechanism does not reorganize the events for subsequent time stamps, but, through a series of parallel comparisons and shifts, is capable, at each request, of supplying the event with the smallest time stamp.

This mechanism solves the research problem but involves a rather complex hardware implementation.

## Objects of the Invention

The main object of this invention is to supply a method for the management of resources in ATM technique for Weighted Fair Queuing (WFQ) applications which does not present the drawbacks of the above mentioned virtual spacing mechanisms.

A further object of this invention is to supply a method which makes it possible to supply good services to real-time applications and to applications which use statistical allocation principles of the bandwidth.

A particular object of this invention is to supply a device which is simple, reliable and inexpensive.

## Summary of the Invention

These and other objects are reached through the invention which is addressed to a method realized in compliance with what illustrated in claim 1.

Is also object of this invention a device realized in compliance with what illustrated in claim 9.

## Advantages of the Invention

Using the method at the base of this invention, even in the worst case of queues which transmit all at higher speed than that determined by the minimum bandwidth assigned, all the queues are correctly served with at least the agreed minimum bandwidth.

Due to the presence of a flag or test step, the queues belonging to CBR transmission flows are securely served.

As regards the transmission flows of ABR type, due to the presence of a first FIFO, which assumes the role of high priority FIFO, the transmission queues present in it are queues which still have available some of the tokens previously assigned to them by the system and which are therefore definitely entitled to have their cells transmitted on the output link.

Due to the presence of a second FIFO, which assumes the role of low priority FIFO, the transmission queues present in it are queues which have already spent all the tokens at their disposal and have surely used the minimum bandwidth to be garanteed to them to.

Due to the scanning method of the second FIFO, no transmission queue manages to monopolize the output link, even if it has a large number of cells to transmit.

In fact, the second FIFO contains queue indicators which have completely used up their tokens, regardless of the number of tokens initially assigned to them. These queues therefore have an equal right to be served.

While, according to a basic implementation of the method and of the device of the invention, are manageable by the WFQ machine of the invention connections of ABR type that is connections with a bit rate available time by time, and non-ABR connections, all treated as peak connections, according to an extended implementation of the method and device of the invention, the functionality of this machine or WFQ system is extended to practically guarantee each type of connection, from the top priority connections or the connections with constant bit rate (CBR) to the VBR and ABR connections and up to the connections of UBR type, or connections with unspecified bit rate. A special scheduler solves the problem of guaranteeing, where necessary, the control of the peak speed in order not to go beyond a certain maximum bit rate for these connections even if the load conditions of the network would permit it. The features of the present invention which are believed to be novel are set forth with particularity in the appended claims.

## Brief description of the drawings

The invention, together with further objects and advantages thereof, may be understood with reference to the following description, taken in conjuction with the accompanying drawings, and in wich:

Fig. 1 shows the structure of the WFQ system according to this invention, in which the structure of the control block for the transmission queues of the device is shown according to a first embodiment;

Fig. 2 shows a management flow chart of the services of the method of this invention, according to an embodiment like that illustrated in Fig. 1;

Fig. 3 is a management flow chart of the services according to an alternative embodiment;

Fig. 4 is a flow chart of insertion of the different types of transmission flows entering appropriate transmission queues organized in different fifos, according to said alternative embodiment of the WFQ system of the invention;

Fig. 5 shows the flow chart of the scheduler, according to the alternative embodiment of the WFQ system of the invention;

Fig. 6 is a functional chart of the WFQ system according to said alternative embodiment.

## Detailed description of a preferred embodiment of the invention.

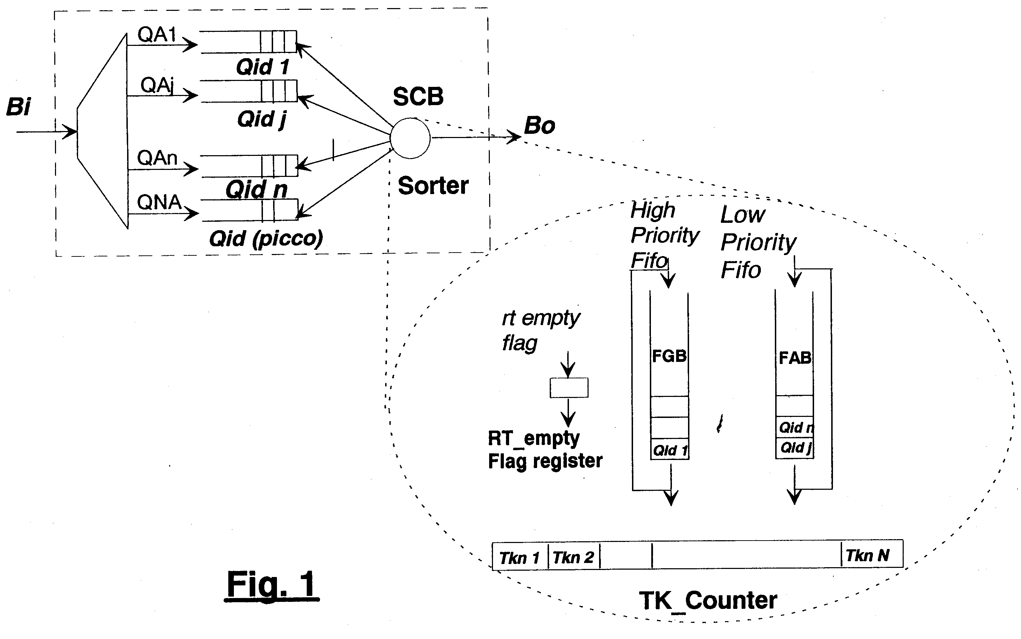

With reference to figure 1, the traffic shaping device according to the invention is globally indicated with SORTER. The device has an ATM input link $B_i$ and an output link $B_o$.

No relation exists between the bandwidth of the input link and the bandwidth of the output link. However, the bandwidth of the input link is typically much larger than the bandwidth of the output link ($B_i \gg B_o$).

The incoming flow consists of cells belonging to a certain number of streams with different QoS levels. These streams consist in a number n of transmission flows of applications with available bandwidth or ABR (for example the not real-time flows pertaining to a data file) for which the system guarantees the maximum bandwidth of availability and in a number n of transmission flows of non-ABR applications (for example the real-time flows related to TV signals etc.), for which the system must however guarantee the established peak bandwidth (CBR or maximum priority concessions).

The total bandwidth available on the link $B_o$ is called $R_{tot}$, the minimum agreed bandwidths of n transmission flows of ABR type are called $RA_i$, the fixed transmission bandwidths of m non-ABR transmission flows are called $RNA_i$,.

In this context the following relation $\Sigma_i\ Ra_i + \Sigma_i\ RNA_i <= R_{tot}$ applies.

The compliance with this relation is guaranteed, during the negotiation step, by a correct assignment to the single applications of the values $Ra_i$ and $RNA_i$.

The ATM cells approaching the link $B_i$ enter one of the n queues $QA_1$, $QA_2$, ... $QA_n$ if belonging to an ABR transmission flow, while they enter a single QHA queue if belonging to a non-ABR transmission flow

The SORTER device contains an SCB control block whose structure is shown in the "expansion" of Fig. 1 defined by the dashed line parameter.

This control block contains two logic FIFOs, indicated respectively with FGB (Fifo Bandwidth Granted) and FAB (Fifo Available Bandwidth) and an RT_EMPTY flag.

The two FIFOs FGB and FAB contain pointers $Qid_i$ to the transmission queues of the SORTER device.

The SCB control block also contains a TK_COUNTER storage device which contains, for each of the transmission queues, a respective $TKN_i$ number. These $TKI_i$ numbers represent the tokens at the disposal of each transmission queue.

The number of tokens assigned to each transmission queue belonging to an ABR transmission flow in a certain TR period, called renewal period, is proportional to the minimum bandwidth assigned during the negotiation step.

The TR period is a whole multiple of the tc cell time of the SORTER device, i.e. of the time that the SORTER device needs to transmit a cell on the link $B_o$.

The optimal choice of the value of the TR period is, as will appear clearer later, fundamental for the correct operation of the SORTER device.

The renewal period is defined $TR = (R_{tot}/G)*tc$ where the factor G characterizes the minimum granularity related to the manageable minimum bandwidth.

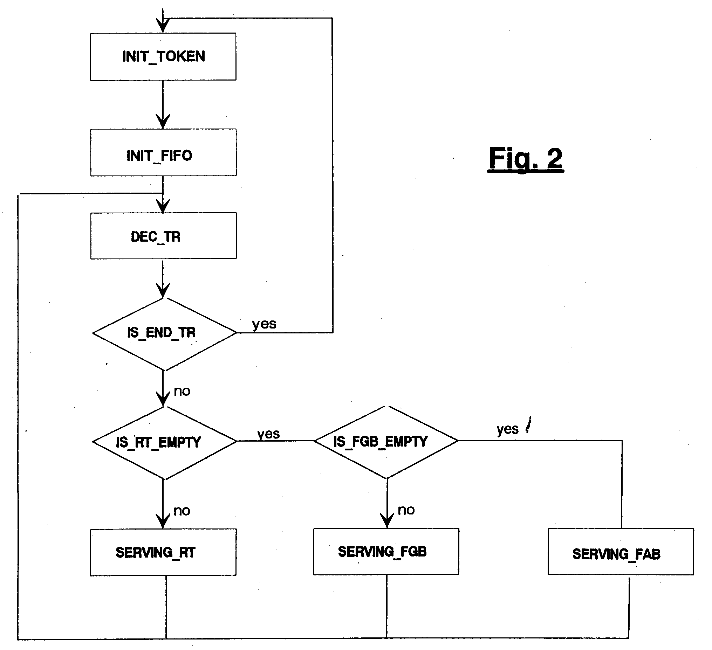

With reference to the enclosed Fig. 2, the method for the distribution of the available bandwidth according to the invention is illustrated.

The method will be described for a single TR period.

At the start of the TR period, the SCB block moves to an INIT_TOKEN step , during which the TK_COUNTER storage device is initialized and the respective tokens assigned to each of the ABR transmission queues.

The number of tokens assigned to each queue belonging to ABR transmission flows is equal to $RA_i/G$.

The SCB block subsequently moves to an INIT_FIFO step, during which any transmission queue pointers contained in the FIFOs FGB and FAB are removed and the identifications of the queues which have cells to transmit are inserted in the FIFO FGB.

The SCB block updates the value contained in the RT_EMPTY flag, writing the true logical value if the QNA queue containing the cells belonging to non-ABR flows is empty, the false logical value in contrary case.

The SCB block decreases the current TR time,( DEC_TR step) by one unit and moves to an IS_END_TR test step in which it checks if the TR time is not terminated.

If the TR time is not yet terminated, the SCB block moves to an ID_RT_EMPTY test step in which it checks if the RT_EMPTY flag is at high logical level.

If the IS_RT_EMPTY test indicates that there are cells belonging to non-ABR flows to be transmitted, the SCB block moves to a SERVING_RT step.

During this step, the SCB block serves the QNA queue containing the cells belonging to the non-ABR flows.

If the RT_EMPTY flag indicates that there are no cells belonging to real-time flows to be transmitted, the SCB block moves to an IS_FGB_EMPTY step in which it checks if the FIFO FGB still contains pointers to transmission queues.

If the FIFO FGB contains pointers to transmission queues, the SCB block moves to a SERVING_FGB step.

During this step the SCB block serves the queue currently pointed by the FIFO FGB, decreases the corresponding number of tokens stored in the TK_COUNTER device by one unit and removes its pointer from the FIFO FGB.

If the queue just served is not empty, its pointer is considered for the reinsertion. If the queue just served has still tokens available, its pointer is reinserted in the FIFO FGB. If it has no more tokens available, its pointer is inserted in the FIFO FGB.

At the end of the SERVING_FGB step, the SCB block returns to the DEC_TR step, in which it decreases the TR time by one unit and repeats the SERVING_FGB step. This step is carried out in cycles until the TR time is exhausted or until the FIFO FGB has been emptied.

If the FIFO FGB is empty, the IS_FGB_EMPTY test is positive and the SCB control block therefore goes on to treat the second FIFO FAB.

If the second FIFO FAB contains pointers to transmission queues, the SCB block moves to a SERVING_FAB step.

During this step the SCB block serves the queue currently pointed by the FIFO FAB and removes its pointer.

If the queue just served is not empty, its pointer is re-inserted in the FIFO FAB.

At the end of the SERVING_FAB step, the SCB blocks returns to the DEC_TR step, in which it decreases the TR time by one unit and repeats the SERVING_FAB step until the available TR time is exhausted.

At the end of the TR time the IS_END_TR test is positive, and the SCB block returns to the initialization steps INIT_TOKEN and INIT_FIFO in which the tokens are newly distributed and the contents of the FIFOs re-initialized.

The RT_EMPTY flag permits the cells stored in the QNA queue to be served immediately.

The FIFO FGB assumes the role of high priority FIFO. The transmission queues present in it are queues which still have tokens available and which therefore are definitely entitled to see their cells transmitted on the input link.

During the TR time interval the FIFO FGB is scanned in cycles and the queues indicated by it are uniformly served.

Due to the decrease of the value of the tokens and the progressive transmission of their cells, these queues may find themselves in different states.

A queue may simultaneously exhaust its tokens and no longer have cells to transmit. This queue will belong to a transmission flow which, during the TR period, has transmitted cells exactly at the speed determined by the assigned minimum bandwidth.

A queue may instead have no more cells to transmit before having exhausted its tokens. This queue will belong to a transmission flow which, during the TR period, has transmitted cells at a lower speed than that determined by the assigned minimum bandwidth.

Finally, a queue may exhaust its tokens before having been able to transmit all its cells. This queue will belong to a transmission flow which, during the TR period, has transmitted cells at a higher speed than that determined by the assigned minimum bandwidth.

During the TR period, due to the constant emptying of the FIFO FGB, only two cases may take place.

In the first case, the total emptying of the FIFO FGB coincides with the end of the TR period. This means that, during the TR period, all the transmission queues have transmitted at least at the speed determined by the assigned minimum bandwidth. In this case, during this period, there will not be any excess bandwidth available to distribute and the FIFO FAB will not even be treated.

In the second case, the total emptying of the FIFO FGB takes place before the end of the TR period. This means that, during the TR period, at least one of the transmission queues has transmitted at a lower speed than that determined by the assigned minimum bandwidth. In this case, during this period, there will be excess bandwidth available to distribute. The FIFO FAB is scanned in cycles in such a way that all the queues present in it are uniformly served, regardless of the number of tokens originally owned by it and the number of cells still to be transmitted.

It may be appreciated that, in this way, even in the worst case of queues which all transmit at a higher speed than that determined by the assigned minimum bandwidth, all the queues are correctly served with at least the agreed minimum bandwidth.

Thanks to the presence of the RT_EMPTY flag and the IS_RT_EMPTY test step, the queues belonging to non-ABR transmission flows are definitely served. The cells belonging to these queues have precedence even over those belonging to the queues indicated in the high priority FIFO FGB.

Also appreciable is the fact that, thanks to the scanning methods of the FIFO FAB, no transmission queue manages to monopolize the output link, even if it has a large number of cells to transmit.

In fact, the FIFO FAB contains queue indicators which have completely exhausted their tokens, regardless of the number of tokens initially owned by them. These queues therefore have an equal right to be served.

The extreme simplicity of the method according to this invention, which permits a simple and inexpensive implementation, may be observed.

The device is also easily configurable and adaptable to different situations.

The negotiated bandwidths are easily varied by simply changing the number of tokens at the disposal of each application.

During the negotiation step, it is also possible to assign the tokens in such a way that the sum of all the minimum bandwidths of all the ABR flows and of all the peak bandwidths of the non-ABR flows are always below the total bandwidth of the output link.

This would make it possible to always have available a certain excess bandwidth for possible distribution.

The variation of the TR period, or of the granularity with which the tokens are distributed, makes it possible to improve the performances of the device in each situation.

While the method and the WFQ system described above permits the management of connections of VBRnrt and ABR type exploiting a token mechanism for the guaranteed bandwidth services (MCR for ABR connections), with insertion of the relevant queues in the high priority FIFO and distributing the available bandwidth among the ABR connections through the insertion of the relevant queues in the low priority FIFO, through a more developed implementation of the method and relevant WFQ system described above, it is made suitable to manage, besides the above mentioned traffic classes, including the so-called CBR classes, also the traffic classes UBR and VBR.

This preferred implementation of the method of the invention is based on the fact that:

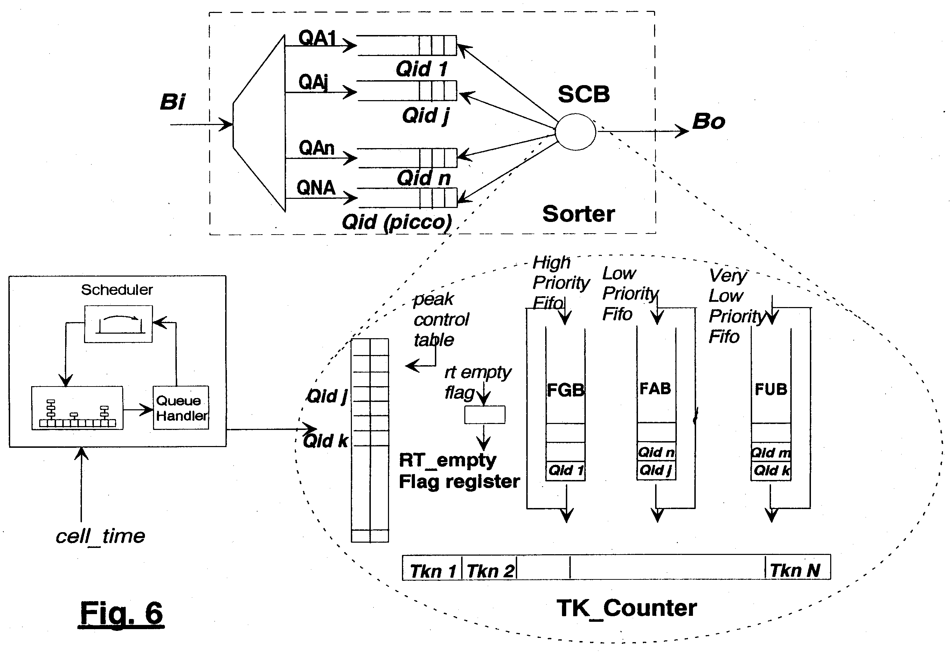

• the CBR connections are all identified in a same queues by block of appurtenance, while, if class UBR connections are required, a specific queue is guaranteed for each connection in a third buffer of fifo FUB type, defined of very low priority, as illustrated in Fig. 6;

• the VBR connections are treated like the ABR connections making a number of tokens equal to the SCR value. These connections do not therefore contribute in the use of the available bandwidth;

• the single QNA queue of non-ABR connections, typically CBR connections with constant bit rate, is served with priority by the system through the use of a flag (flag register RT), as already described above in relation to the basic layout of Fig. 1, while the UBR queues, if they have cells to transmit, are inserted in a third FIFO named FUB, besides the two already provided by the basic system (FGB and FAB), which is defined of very low priority (VLPF Very Low Priority Fifo).

This third FIFO is scanned for a possible service only if the flat relating to the CBR connections is extinguished and the other two FIFOs, FGB and FAB (High Priority Fifo and Low Priority Fifo) do not have identifications of queues to be served.

Also in this case, as for the ABR queues, the available bandwidth is uniformly distributed among the UBRs.

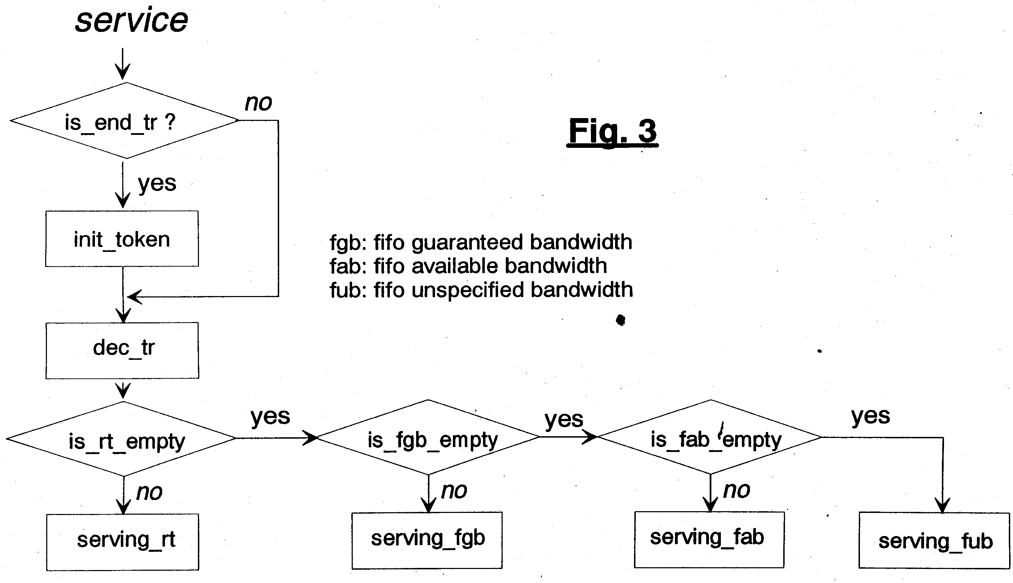

At level of general organization of the service by the WFQ machine of the invention, this expansion of the management capacity of the system is exemplified in the service flow diagram in Fig. 3.

With respect to the flow in Fig. 2, a further test suitable to establish if also the low priority FIFO FAB is empty is substantially added. If also the FAB is empty, the system takes into consideration the queues at present accumulated in a third very low priority FIFO (named FUB) in which the transmission queues of UBR class are possibly loaded.

The transmission queues with guaranteed bandwidth are therefore inserted in the high priority FIFO (FGB) and the transmission queues definable with available bandwidth are inserted in the low priority FIFO (FAB), while the transmission queues with unspecified bandwidth are inserted in the very low priority FIFO (FUB).

A further function of this solution makes it possible to control the peak of single non-CBR connections.

Unlike the known systems in which the peak control is implemented through a virtual spacing mechanism which "slows down" the bit rate inserting some waiting cycles in the calendar system, in practice waiting for the first event to be served, if infringing the peak value, until it is possible to transmit it without infringing the peak bit rate of the particular connection, the system of this invention makes it possible instead to apply a selective peak control mechanism on the single queues, thus being able to continue to serve the transmission queues which do not need peak control according to a pure WFQ technique.

All the queues therefore contribute to the use of the available bandwidth, maintaining the mechanisms of statistical sharing of the bandwidth, but only the queues which need peak control are limited by this threshold value.

The need to insert a checking mechanism on the bit rate time basis to fulfil the requisites of transmission queues with peak control is solved by this invention using, upstream from the WFQ system, a scheduler block, which has the function of supplying the WFQ machine with information on the possibility or impossibility of inserting queue identifications in one of the FIFOs without infringing the peak value.

According to a particularly preferred embodiment of this block, a calendar mechanism is used, although other equivalent scheduler mechanisms are equally applicable.

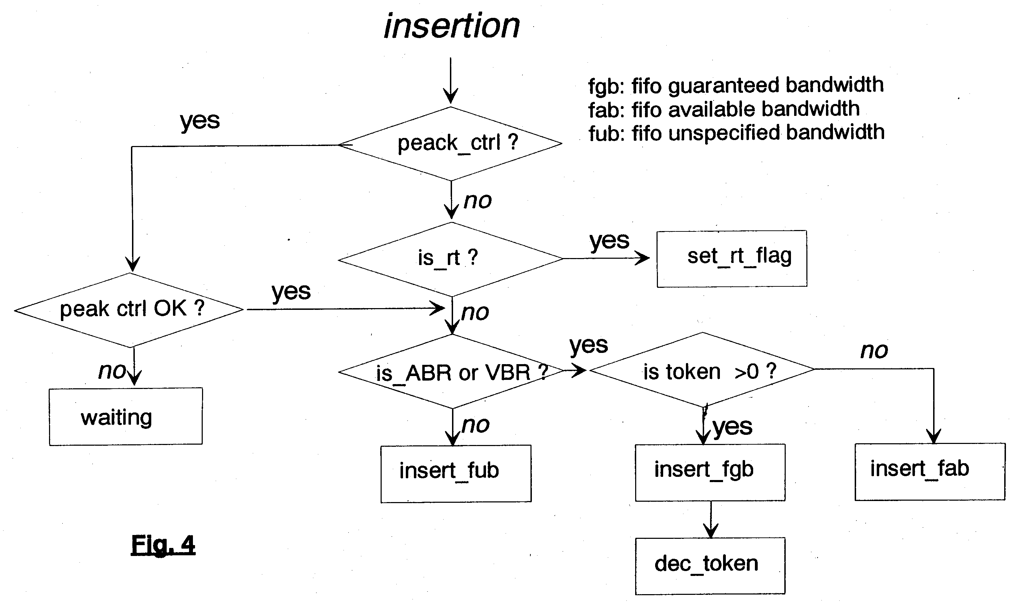

In Fig. 4 the flow chart is shown which, according to the method of the invention, governs the insertion of each input queue in the relevant FIFOs, distinguishing if a peak control should or should not be applied to the particular input queue.

Since the CBR connections in input are all identified in a same QNA transmission queue by block of appurtenance and conventionally served with priority, through the use of a flag, all the other connections are previously tested by the system according to the flow chart in Fig. 4 and identified in an equal number of queues which are inserted in one of the three FIFOs of the system FGB, FAB and FUB.

The scheduler block of the system of the invention, according to this preferred embodiment, either implemented by a calendar mechanism or by other equivalent mechanism, performs its function of peak shaper through a peak control table using two bits for each queue managed by the WFQ system.

One of the two bits represents a wait bit generated by the algorithm of Fig. 4.

The second bit of the pair is a flag which is, set by the scheduler/shaper block.

The update from scheduler is combined with the wait bit to establish the qualification for the transmission in compliance with the maximum peak speed of the particular queue.

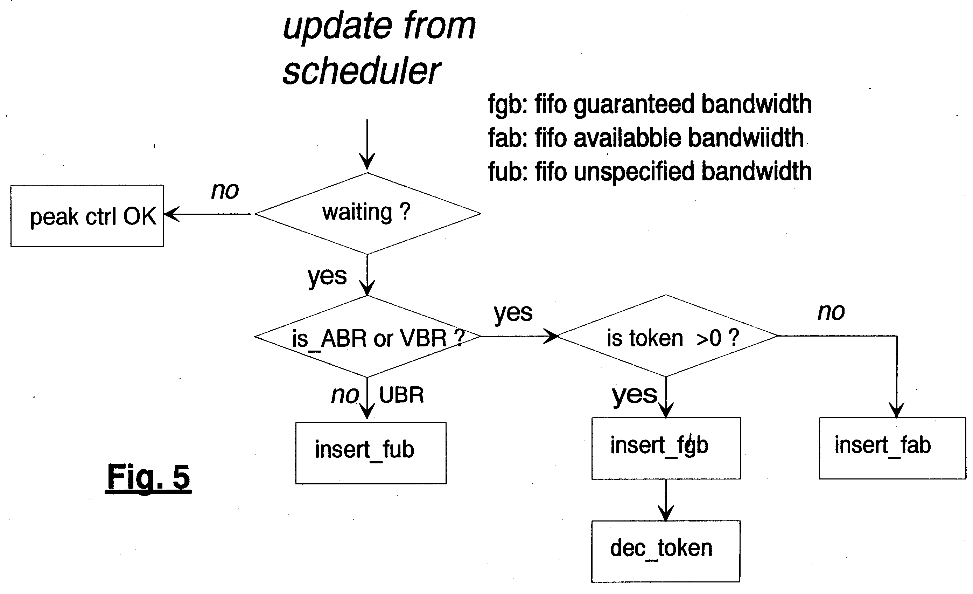

The algorithm is illustrated in the flow chart in Fig. 5.

A functional layout of the system of the invention according to this preferred embodiment is shown in Fig. 6. For comparison with the basic layout in Fig. 1, the presence is observed in the SCB control block of the third FIFO FUB, of the table with two bits of peak control and of the scheduler block which may be implemented by a common calendar mechanism or another equivalent mechanism.

The queues without peak control continue to be managed by the WFQ machine (SORTER) in a method of operation according to a pure WFQ algorithm.

In fact, the algorithm of the service is independent from the fact that the Qid transmission queues extracted are with or without rate shaping. This makes it possible to use all the service slots of the block if cells must be transmitted between the queues without rate shaping and/or between the queues with rate shaping.

In this form the system makes it possible to maintain the renewal period of the WFQ of sufficient length to permit the management of any guaranteed minimum bandwidth, while the SCHEDULER block supplies, through a flag (traffic light), the scheduling necessary to control the peak very closely to the ideal profile (apart from the CDV inserted by the calendar mechanisms).

The system also makes possible to manage the excess bandwidth in integrated manner, uniformly distributing it among the various connections and intervenes on the connections which need rate shaping only when their service would cause an infringement of the peak bandwidth.

Therefore, while a particular embodiment of the present invention has been shown and described, it should be understood that the present invention is not limited thereto since other embodiments may be made by those skilled in the art without departing from the scope thereof. It is thus contemplated that the present invention encompasses any and all such embodiments covered by the following claims.

**Claims**

1. Method for the management of resources in ATM technique for Weighted Fair Queuing (WFQ) applications in a system (SORTER) for the transmission on an output link ($B_o$) of flows of ATM cells pertaining to an input link ($B_i$) of the type including service classes with different quality (QoS), an assigned guaranteed minimum bandwidth ($Ra_i$) being associated to each of said flows at the set up step of the service, and each of said flows of cells exploiting the possibility to have further bandwidth assigned on said output link ($B_o$), characterized by the fact of assigning to each of said flows, in a renewal time (TR) whole multiple of the transmission time of a cell (tc) on said output link ($B_o$), a respective number of access rights to said output link ($B_o$) or token ($TKN_i$) proportional to said minimum bandwidth ($Ra_i$), and, for each renewal time (TR), including the steps of:

   - inserting the cells of each of said flows in a respective transmission queue ($QA_i$);
   - assigning (INIT_TOKEN) to each of said transmission queues ($Qa_i$) its own token number ($TKN_i$);
   - inserting (INIT_FGB) indicators ($Qid_i$) of said transmission queues ($Qa_i$) inside a high priority storage structure (FGB);
   - scanning (SERVING_FGB) said high priority storage structure (FGB) in order to serve the transmission queues in FIFO order, decreasing the tokens at their disposal and transferring the indicators of the queues which have exhausted their tokens inside a low priority storage structure (FAB);

   - after terminating (IS_FGB_EMPTY) the scan of said high priority storage structure (FGB), scanning (SERVING_FAB) said low priority storage structure (FAB) in order to serve the queues indicated by it until the end of the renewal time (TR) occours.

2. Method according to claim 1, <u>characterized by the fact</u> that said step of scanning said high priority storage structure (FGB) includes, for each cell time (tc), the following steps:

   - serving the transmission queue ($Qa_i$) indicated by said high priority storage structure (FGB);
   - decreasing by one unit the number of tokens ($TKN_i$) at the disposal of said transmission queue ($Qa_i$);
   - removing the indicator of said queue from said high priority storage structure (FGB);
   - re-inserting, if in said just served transmission queue ($Qa_i$) further cells to be transmitted are present, the indicator of this transmission queue ($Qa_i$) inside said high priority storage structure (FGB) if a number of tokens ($TKN_i$) over zero remains available to this transmission queue, and, in the negative, inside said low priority structure (FAB).

3. Method according to claim 1, characterized by the fact that said step of scanning said low priority storage structure (FAB) includes, for each cell time, the following steps:

   - serving the transmission queue ($QA_i$) indicated by said low priority storage structure (FAB);
   - removing the indicator of said queue of said low priority storage structure (FAB);
   - re-inserting, if further cells to be transmitted are present in said just served transmission queue ($QA_i$), the indicator of said transmission queue ($Qa_i$) inside said low priority storage structure (FAB).

4. Method according to claim 1, characterized by the fact that said input link ($B_i$) also includes flows of ATM cells which transmit at peak and which do not exploite therefore said further bandwidth possibly available on said output link ($B_o$), and, for each renewal time (TR), including the following further steps:

   - inserting said cells of each of said flows which transmit at peak in a common queue (QNA);

- transmitting the cells present in said common queue (QNA) on said output link ($B_o$) until said common queue (QNA) is empty (IS_RT_EMPTY);
- only after having transmitted all the cells present in said common queue (QNA), resuming said scanning step (SERVING_FGB) of said high priority storage structure (FGB) or eventually said scanning step (SERVING_FAB) of said low priority storage structure (FAB).

5. Method according to claim 4, characterized by the fact that said input link ($B_i$) also includes flows of ATM cells pertaining to connections with unspecified bit rate (UBR) whose transfer is not guaranteed in a certain time and, for each renewal period (TR), the method includes the following further steps of:

- inserting said cells of said flows with non-guaranteed transfer time in a third buffer of very low priority FIFO type (FUB) in an equal number of transmission queues;
- scanning said third very low priority FIFO (FUB) whenever said common queue (QNA) of said high priority buffer (FGB) is empty, and all the transmission queues inserted in said high priority FIFO buffer (FGB) and the transmission queues inserted in said low priority FIFO buffer (FAB) ar empty.

6. Device according to claim 1, characterized by the fact that said input link ($B_i$) also includes flows of ATM cells of connections requiring a peak bandwidth control so as not to exceed a predetermined maximum bandwidth value in the transmission of said flows through said output link ($B_o$), and by the fact that, for each renewal period (TR) the method includes the scheduling of the transmission through said output link ($B_o$) of cells belonging to flows with limited peak bandwidth, inserting the cells coming from said input link ($B_i$) in a respective queue of one of said FIFO buffers (FGB, FAB or FUB), depending on the class of the relevant flow;

the insertion of each cell belonging to said flows with limited peak bandwidth being conditioned by a peak control table with two bits updated by a scheduler.

7. Method according to claim 6, characterized by the fact that one of said two bits of said peak control table is generated as wait bit from the WFQ system and the other bit of said pair is a flag set by said scheduler.

8. Method according to claim 1, characterized by the fact that said high and low priority storage structures operate according to FIFO approach.

9. Management system of resources in ATM technique for Weighted Fair Queuing (WFQ) applications, including an input link ($B_i$) on which transit flows of ATM cells belonging to service classes with different quality (QoS), to each of said flows being associated a respective guaranteed minimum bandwidth ($Ra_i$) at the set up step of the service, and an output link ($B_o$), and each of said flows exploiting the possibility to have further bandwidth assigned on said output link ($B_o$), characterized by the fact of including:

- a number of transmission queues ($QA_1$, $QA_2$, $QA_n$) equal to the number of said flows of cells, each of said queues containing the ATM cells of a respective flow of cells, and assigning to each transmission queue, in a renewal period (TR) a whole multiple of the transmission time of a cell (tc) on said output link ($B_o$), a respective nember of access rights to said output link ($B_o$) or token ($TNK_i$) proportional to said minimum bandwidth ($Ra_i$);
- a control block (SCB) including a storage device (TK_COUNTER) which contains, for each of said transmission queues, a respective number of access rights to said output link ($B_o$) or token ($TKN_i$) proportional to said minimum bandwidth ($Ra_i$);
- a high priority storage structure (FGB) which contains indicators ($Qid_i$) of the transmission queues ($Qa_i$) which have at their disposal a number of tokens ($TKN_i$) over zero;

  a low priority storage structure (FAB) which contains indicators ($Qid_i$) of the transmission queues ($Qa_i$) which have at their disposal a number of tokens ($TKN_i$) equal to zero, said high priority storage structure (FGB) being connected with said low priority storage structure (FAB) in such a way that:

  • one of said indicators ($Qid_i$) present in said high priority storage structure may be transferred to said low priority storage structure as the exhaustion of the tokens at its disposal stored in said storage device (TK_COUNTER) occours;
  • a transmission queue indicated in said low priority storage structure (FAB) can only be served when said high priority storage structure (FGB) does not contain transmission queue indicators.

10. System according to claim 9, characterized by the fact that said input link ($B_i$) also includes flows of ATM cells which transmit at peak and which do not have therefore the possibility of exploiting said further bandwidth possibly available on said output link ($B_i$), and further caracterized by the fact of including a further transmission queue (QNA) which contains the cells of all those flows of ATM cells which transmit at peak and an indicator device (RT_EMPTY) which contains an indication on the filling state of said further transmission queue, said indicator device being connected with said high priority storage structure (FGB) and said low priority storage structure (FAB) in such a way that a transmission queue indicated in said high priority storage structure (FGB) or in said low priority storage structure (FAB) can only be served when said indicator device (RT_EMPTY) indicates the absence of cells to be transmitted inside said further transmission queue (QNA).

11. System according to claim 10, characterized by the fact that from said input link ($B_i$) also includes flows of ATM cells relating to connections with unspecified rate (UBR) whose transfer is not guaranteed in a certain time and said system also including:

- a third very low priority storage structure (FUB) containing the indicators (Qidm, Qidk,...) of transmission codes relating to said connections with unspecified rate (UBR);
- scanning means of said third very low priority storage structure (FUB) whenever said common queue (QNA) is empty, and all the transmission queues whose indicators are inserted in said first high priority storage structure (FGB) and the transmission codes whose indicators are inserted in said second low priority storage structure (FAB) are empty.

12. System according to claim 10, characterized by the fact that said input link ($B_i$) includes flows of ATM cells of connections requiring a peak rate control in order not to exceed a certain maximum rate value in the transmission of said flows through said output link ($B_o$), and said system also includes means adapted to schedule the transmission through said output link ($B_o$) of cells belonging to flows with limited peak rate, inserting the relevant cells coming from said input link ($B_i$) in a respective queue of one of said storage structures (FGB, FAB, FUB), depending on the class of the relevant flow;
said means using a peak rate control table with two bits, one of said two bits being generated as wait bit from said control block (SCB) and the other of said two bits being a flag updated by a scheduler.

13. System according to any of the previous claims, characterized by the fact that said storage structures are FIFO type memories.

Bi

SCB

Sorter

QA1 Qid 1

QAi Qid j

QAn Qid n

QNA Qid (picco)

Bo

High Priority Fifo

Low Priority Fifo

FGB

FAB

Qid 1

Qid n
Qid j

rt empty flag

RT_empty Flag register

Tkn 1 | Tkn 2

Tkn N

TK_Counter

**Fig. 1**

10

## Fig. 2

**service**

## Fig. 3

fgb: fifo guaranteed bandwidth
fab: fifo available bandwidth
fub: fifo unspecified bandwidth

EP 0 843 499 A2

# *insertion*

fgb: fifo guaranteed bandwidth
fab: fifo available bandwidth
fub: fifo unspecified bandwidth

**peack_ctrl ?**
- yes
- *no*

**is_rt ?**
- yes → **set_rt_flag**
- *no*

**peak ctrl OK ?**
- yes
- *no* → **waiting**

**is_ABR or VBR ?**
- yes → **is token >0 ?**
  - *yes* → **insert_fgb** → **dec_token**
  - *no* → **insert_fab**
- *no* → **insert_fub**

**Fig. 4**

fgb: fifo guaranteed bandwidth
fab: fifo available bandwidth
fub: fifo unspecified bandwidth

update from scheduler

waiting ?

no → peak ctrl OK

yes → is_ABR or VBR ?

yes → is token >0 ?

no → insert_fab

yes → insert_fgb → dec_token

no UBR → insert_fub

**Fig. 5**

14

Fig. 6